# FASCICULE DE BREVET EUROPEEN

(11) **EP 3 016 861 B1**
(45) Date de publication et mention de la délivrance du brevet: **31.05.2017**
(21) Numéro de dépôt: 14747693.1
(22) Date de dépôt: 01.07.2014
(51) Int. Cl.: E05D 7/00, E05F 3/18, E05F 3/20, B64D 29/08, B64D 29/06, F01D 25/24

(54) **DISPOSITIF D'ASSISTANCE POUR LA MANOEUVRE D'UN CAPOT ET NACELLE DE TURBOREACTEUR AINSI EQUIPEE**
VORRICHTUNG ZUR UNTERSTÜTZUNG DER MANÖVRIERUNG EINER ABDECKUNG UND TURBOJET-TRIEBWERKSGONDEL DAMIT
DEVICE FOR ASSISTING IN THE MANOEUVRING OF A COVER AND TURBOJET ENGINE NACELLE EQUIPPED WITH SAME

(30) Priorité: 01.07.2013 FR 1356383
(43) Date de publication de la demande: 11.05.2016
(73) Titulaire: Safran Nacelles, 76700 Gonfreville-l'Orcher (FR)
(72) Inventeur: BOILEAU, Patrick, F-31170 Tournefeuille (FR); BLONDEAU, Samuel, F-31820 Pibrac (FR)
(74) Mandataire: Gaillarde, Frédéric F. Ch.
(86) Numéro de dépôt international: PCT/FR2014/051689
(87) Numéro de publication internationale: WO 2015/001251

(56) Documents cités:
- EP-A1- 1 515 006
- FR-A1- 2 771 710
- FR-A1- 2 830 842
- FR-A1- 2 920 134
- FR-A1- 2 920 145

## Description

La présente invention concerne un dispositif d'assistance pour la manoeuvre d'un capot, notamment un capot de soufflante sur une nacelle de turboréacteur ou dispositif du même genre. Elle concerne aussi une nacelle de turboréacteur ainsi équipée.

Dans l'état de la technique, il est connu de disposer des capots sur des nacelles de turboréacteur. De tels capots permettent d'assurer la continuité de la peau aérodynamique de la nacelle, lorsqu'ils sont fermés et lors du vol de l'aéronef équipé. Lorsque l'aéronef est au sol, il subit des visites de maintenance ou du même genre et certains organes intérieurs de la nacelle doivent alors être accessibles par l'ouverture du capot protecteur.

A cette fin, le capot est monté sur une ou plusieurs articulations montées sur une partie fixe ou support de la nacelle. Dans le cas par exemple du capot de soufflante, les dimensions du capot sont relativement importantes de sorte qu'une masse importante doit être manoeuvrée. De plus, la prise au vent est aussi un problème de sorte que plusieurs opérateurs de maintenance sont mobilisés pour ouvrir un seul capot notamment pour des nacelles de grandes dimensions.

Or, l'opération d'ouverture et celle de fermeture viennent accroître le temps de travail opérateur, de sorte qu'elles représentent un coût non négligeable pour l'exploitation d'un aéronef commercial.

Pour résoudre ce problème, il faut donc en particulier limiter l'intervention humaine pour la manipulation du capot. Il est connu dans l'état de la technique de disposer des vérins permettant une manoeuvre entièrement automatique, l'intervention de l'opérateur se limitant à activer un levier de commande qui met en action les vérins.

Une telle solution ne peut pas être facilement mise en oeuvre sur une nacelle déjà existante, puisqu'elle impose l'implantation des vérins et de leurs fixations tant sur le capot à mobiliser que sur la partie fixe relativement au capot. De plus, les vérins d'actionnement sont des dispositifs relativement lourds qui viennent accroître le bilan de masse de l'aéronef, ce qui est à proscrire.

Par ailleurs, il est connu que le capot lui-même présente la quantité de matière juste nécessaire pour réaliser les deux fonctions précitées de continuité de peau aérodynamique en vol et de manipulation pour les opérations de maintenance. Il n'est pas facile sinon impossible d'ajouter les parties de solidarisation d'un vérin d'entraînement sur un tel capot, notamment parce que la peau utilisée est très peu renforcée et que l'action du vérin de levage pourrait conduire à percer ou à endommager le capot. L'ajout d'un renfort à la conception exige une nouvelle étude d'implantation et accroît encore la masse embarquée de l'aéronef. En outre, on connaît le document FR 2 771 710 A1, qui est considéré comme l'art antérieur le plus proche et décrit les caractéristiques du préambule de la revendication 1. La présente invention apporte remède à ces inconvénients de l'état de la technique en présentant un dispositif d'assistance pour la manoeuvre d'un capot de nacelle de turboréacteur articulé au moyen d'au moins une ferrure. Le dispositif d'assistance de l'invention comporte :
- au moins une pièce coudée montée sur une articulation adaptée pour être coaxiale à l'articulation de ladite ferrure et présentant une extrémité portant sur ladite ferrure, et
- un ressort de compression appliqué sur ladite pièce coudée, adapté pour exercer sur la ferrure de capot un moment d'assistance lorsque le capot est levé.

Selon d'autres caractéristiques :
L'application du ressort à compression sur ladite pièce coudée comporte une articulation de la pièce coudée dont une extrémité porte une pièce adaptée pour s'appuyer sur la ferrure de capot à assister. ;
le ressort à compression est appliqué sur un levier qui comporte une pièce d'appui sur la surface intérieure d'un support des capots comme le pylône de nacelle ;
le dispositif d'assistance affecte la forme d'un étrier, le levier comportant une paire de barres parallèles et la pièce coudée comportant deux parties parallèles ;
le ressort à compression comporte au moins un ressort choisi notamment parmi les ressorts à gaz ou les ressorts hélicoïdaux ;
le dispositif d'assistance comporte deux ressorts disposés entre les parties parallèles en étrier de ladite pièce coudée et les barres parallèles du levier ;
l'articulation colinéaire à une articulation existante ou charnière pour une ferrure du capot comporte un arbre adapté pour être commun avec l'articulation de la ferrure de capot sur laquelle est appliqué le moment d'assistance du ressort de compression.

L'invention concerne aussi une nacelle de turboréacteur ou de même genre, la nacelle étant du genre comportant au moins un capot articulé sur un support comme le pylône. La nacelle de l'invention comporte au moins un dispositif d'assistance au levage du capot selon l'invention, sur au moins une articulation d'une pluralité d'articulations dudit capot.

D'autres caractéristiques et avantages de la présente invention seront mieux compris à l'aide de la description et des dessins parmi lesquels :
- la Figure 1 représente une partie de nacelle de l'état de la technique présentant deux capots latéraux fermés ;
- la Figure 2 représente la partie de nacelle de l'état de la technique présentant les deux capots de la Figure 1 à l'état ouverts ;
- La Figure 3 représente la partie de nacelle de l'état de la technique, selon les Figures 1 ou 2, sur laquelle on a disposé des dispositifs d'assistance selon un mode de réalisation de l'invention ;
- Les Figures 4 à 6 représentent un autre mode de réalisation de l'invention ;
- La Figure 7 représente un autre mode de réalisation de l'invention ; et
- Les Figures 8 et 9 représentent un autre mode de réalisation de l'invention.

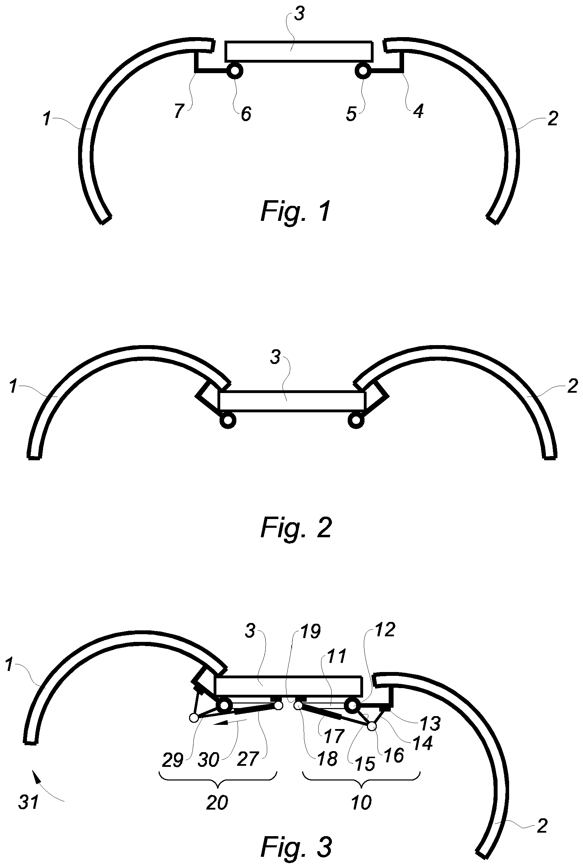

Aux Figures 1 et 2, on a représenté schématiquement une partie de nacelle de l'état de la technique comportant deux capots latéraux fermés. Le dessin représente une vue schématique en coupe partielle avec un capot gauche 1, un pylône ou support 3 et un capot droite 3. Les capots gauche 1 et droite 2 sont articulés sur le pylône 3 par une charnière 6 ou 5 respectivement solidaires de la face inférieure au dessin du pylône 3. Chaque charnière ou articulation 6 ou 5 porte une ferrure coudée 7 ou 4 dont l'extrémité est solidaire, par exemple par vissage sur la face intérieure du capot gauche 1 ou droite 2 respectivement.

Lorsque le moteur contenu dans la nacelle est à l'état de fonctionnement, les deux capots gauche 1 et droite 2 sont à l'état fermé (figure 1). Lorsque l'appareil équipé de la nacelle est en maintenance ou en contrôle, les agents de maintenance peuvent ouvrir le capot gauche 1 ou droite 2 en soulevant le bord libre (inférieur au dessin) de sorte que le capot gauche 1 ou droite 2 pivote autour de l'articulation 6 ou 5 respectivement. La nacelle est alors représentée à la Figure 2, les capots gauche 1 et droite 2 à l'état ouvert.

Ainsi qu'on l'a indiqué plus haut, la masse du capot, sa grande dimension sur les nacelles les plus importantes, et la prise au vent sur les plateformes de maintenance aéroportuaire, empêchent une manoeuvre aisée par un seul agent de maintenance.

Selon l'invention, il est possible d'ajouter à l'équipement existant de la nacelle un dispositif d'assistance à la manoeuvre ou levage du capot à l'aide de moyens réduits, permettant de ne pas modifier la conception d'un appareil et de sa nacelle.

A la Figure 3, on a représenté un mode de réalisation d'un tel dispositif d'assistance. La nacelle représentée partiellement, comporte les mêmes éléments que ceux des Figures 1 et 2 et toutes les références de ces deux Figures n'y sont pas reportées pour clarifier le dessin, même si mention en sera faite dans le texte qui suit. Deux dispositifs d'assistance 10 et 20 ont été représentés. Ils sont identiques. Mais, le dispositif d'assistance 10, monté sur l'articulation 5 (référence identique à celle de la Figure 1, mais non reportée à la Figure 3) est à l'état inactif, le capot droite 2 étant resté fermé. Le Dispositif d'assistance 20, monté sur l'articulation 6 (référence identique à celle de la Figure 1, mais non reportée à la Figure 3) est à l'état actif, l'opérateur de maintenance ayant manoeuvré le capot gauche 1 en position ouverte.

Le dispositif d'assistance au levage 10 du mode de réalisation de la Figure 3 comporte un levier 11 qui porte deux articulations ; respectivement à droite une articulation 12, coaxiale à l'articulation 5 (voir Figure 1), et à gauche une articulation 18. Le levier 11 au voisinage de l'articulation 12, porte une pièce d'appui 19 sur la face intérieure (au dessin) du pylône ou support 3. La pièce d'appui 19 peut le cas échéant être solidarisée de la dite face intérieure du pylône 3, par boulonnage ou autrement. Mais, ainsi qu'il sera compris à l'aide des dispositions qui suivent, l'équilibre du dispositif d'assistance lorsqu'il est contraint par le poids du capot, est assuré.

L'articulation 12, coaxiale avec l'articulation 5 (Figure 1), porte une pièce coudée 13-15 dont une première partie 15 présente une extrémité à gauche solidaire de l'articulation 12 et une extrémité à droite solidaire d'une autre articulation 16. Une deuxième partie 14 de la pièce coudée 13-15 est solidaire de la première partie 15 - et le cas échéant de l'articulation 16 sans pouvoir cependant tourner relativement à la première partie 15. Enfin, l'extrémité à droite de la deuxième partie 14 porte une pièce d'appui 13 sur une partie déterminée de la ferrure 4 (voir Figure 1). Comme la pièce d'appui 19 précitée, la pièce d'appui 13 de la pièce coudée 13-15 peut le cas échéant être solidarisée de la dite ferrure 4 (Figure 1), par boulonnage ou autrement. Mais, ainsi qu'il sera compris à l'aide des dispositions qui suivent, l'équilibre du dispositif d'assistance lorsqu'il est contraint par le poids du capot, est assuré.

Enfin, le dispositif d'assistance au levage du capot 10 comporte au moins un ressort à compression dont une extrémité est appliquée sur une partie de la pièce coudée. Dans le mode de réalisation de la Figure 3, l'application du ressort sur la pièce coudée porte sur une articulation de la pièce coudée. Dans d'autres modes de réalisation, une extrémité du ressort à compression est aussi appliquée sur un levier. Dans le mode de réalisation décrit, le ressort de compression 17 est monté par une première extrémité sur l'articulation 18 précitée sur le levier 11, tandis que l'extrémité de la tige mobile du ressort à compression 17 est montée à droite sur l'articulation 16 solidaire de la pièce coudée 13-15.

Dans un mode de réalisation, le ressort à compression 17 est un ressort à gaz présentant un corps cylindrique étanche à une extrémité duquel ressort une tige mobile, qui porte un piston destiné à parcourir le volume intérieur du corps étanche sous pression d'un gaz.

Dans un exemple de réalisation, le capot 1 ou 2 représente une masse de 57 kilos. Le dispositif d'assistance, levier 12 et pièce coudée 13-15, a été réalisé en titane et avec un ressort à gaz de 700 grammes, il présentait une masse totale de 1.300 grammes. L'amplitude du mouvement de rotation du capot était de l'ordre de 60° et la force d'assistance allait de 120 N au début de l'ouverture à 340 N en position ouverte.

On va maintenant décrire le fonctionnement du dispositif d'assistance 20, identique au dispositif d'assistance 10, mais couplé au capot gauche 1. Lorsque l'opérateur de maintenance a déverrouillé le verrou (non représenté) du capot gauche 1 sur le reste de la nacelle (non représenté), il saisit son bord inférieur et lui fait parcourir un mouvement de rotation 31 autour de l'articulation 6 (Figure 1). Dans le même temps, le ressort à gaz 27 du dispositif d'assistance 20 allonge sa tige mobile 29 dans la direction 30, ajoutant son effort de compression relâchée au moment de levage de l'opérateur de maintenance. La pièce coudée du dispositif d'assistance 20, analogue à la pièce coudée 13-15 du dispositif d'assistance 10, exerce un moment compensateur sur la ferrure 7 (Figure 1) assistant ainsi la manoeuvre de l'opérateur de maintenance qui peut ainsi agir seul.

Portant seulement sur la face inférieure du pylône et sur la ferrure 7, le dispositif d'assistance 20 n'exerce aucune contrainte sur une partie faible de la nacelle. De plus, en concevant des angles aigus par rapport aux surfaces d'appui sur la ferrure et sur le pylône, le dispositif d'assistance reste en place grâce aux pièces d'appui, même sans l'utilisation de fixations, uniquement en reposant sur l'articulation 6 avec laquelle le dispositif partage un axe d'articulation.

Le dispositif de l'invention ne présente qu'une addition minime sur les dispositifs embarqués dans la nacelle de sorte que son implantation ne pose pas de problème sur une nacelle existante. De même, son intégration à la conception d'une nouvelle nacelle n'entraîne pas de contraintes supplémentaires.

En plus de la conformation des pièces d'appui (13 et 19 ; dispositif d'assistance 10) avec la face inférieure du pylône et avec la ferrure (4 ; Figure 1), le montage du dispositif d'assistance de l'invention exige seulement de modifier l'articulation déjà existante sur la ferrure reliant le capot à la face inférieure du pylône. Dans la pratique, cette articulation est composée d'un ou de plusieurs arbres sur l'axe de l'articulation qui s'engage dans les perçages correspondants de la ferrure 4 ou 7 et d'une partie fixée à la face inférieure du pylône. Dans un mode de réalisation, cet arbre est retiré et remplacé par un arbre plus long qui s'engage aussi dans l'articulation 12 (dispositif 10) solidaire de la pièce coudée 13-15 et du levier 11. Un exemple de réalisation sera décrit plus loin.

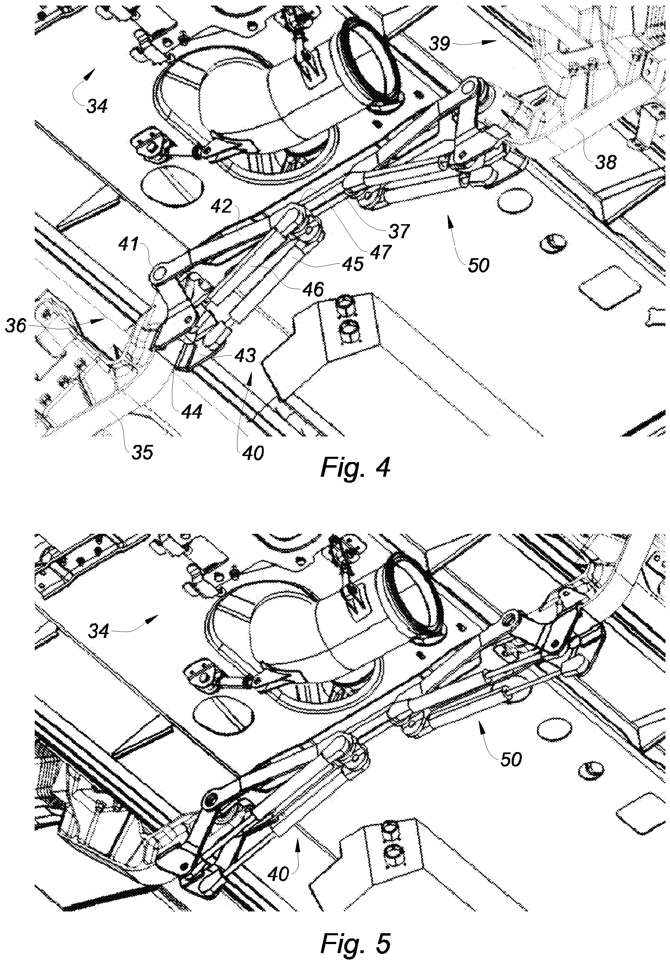

Aux Figures 4 à 7, on a représenté trois vues en perspective d'un autre mode de réalisation de l'invention, quand elle est montée sur une nacelle existante. La partie de nacelle concernée est vue de l'avant lorsqu'elle est montée sur le pylône 34. On a représenté deux dispositifs d'assistance 40 sur le capot 36 de gauche et 50 sur le capot 39 de droite. Le capot 36 de gauche est solidaire d'une ferrure 35 dont une extrémité non visible est articulée par un arbre sur une ferrure fixe solidaire de la face intérieure du pylône 34. De même, le capot 39 de droite est solidaire d'une ferrure 35 dont une extrémité visible est articulée par un arbre sur une ferrure fixe solidaire de la face intérieure du pylône 34.

Un dispositif d'assistance 40 est monté sur la ferrure 35 du capot de gauche 36 et un dispositif d'assistance 50 est monté sur la ferrure 38 du capot de droite 39. La disposition de ces deux dispositifs d'assistance est analogue à celle du mode de réalisation de la Figure 3.

A la Figure 4, les capots sont en position fermée, tandis qu'ils sont ouverts à la Figure 5. On note la présence d'une barre de renfort 37 qui réunit les ferrures fixes solidaires de la face intérieure à la nacelle du pylône, les ferrures fixes participant à l'articulation classique des capots gauche 36 avec la ferrure 35 et droite 39 avec la ferrure 38. La section particulière de la barre de renfort 37 entraîne un profil adapté sur la pièce d'appui 47, analogue à la pièce d'appui 19 du dispositif d'assistance 10 décrit à la Figure 3.

Dans le mode de réalisation des Figures 4 à 6, le dispositif d'assistance adopte la forme d'un étrier, de sorte que le levier 11 et la pièce coudée 13-15 du dispositif d'assistance 10 du mode de réalisation de la Figure 3 sont doublés sur le dispositif d'assistance 40 du mode de réalisation de la Figure 4. Ainsi, sur le dispositif d'assistance 40 à gauche, l'équivalent du levier 11 est composé de deux barres parallèles dont seule la barre avant 42 est visible et elles sont réunies notamment par la pièce d'appui 47. De même, le ressort 17 du mode de réalisation de la Figure 3 est doublé par deux ressorts identiques 45 et 46 et la pièce coudée 13-15 est elle aussi doublée par deux parties semblables et parallèles dont seule la partie arrière 43 a été référencée et qui sont reliées par une pièce d'appui 44 sur la ferrure 35, la pièce d'appui 44 étant analogue à la pièce d'appui 13 du dispositif d'assistance 10 du mode de réalisation de la Figure 3. Les extrémités des deux ressorts 46 et 45 sont articulées sur des articulations convenables respectivement des deux parties de la pièce coudée 43-44 et du levier double 42.

Enfin, un arbre commun 41 au dispositif d'assistance 40 et à la ferrure 35 permet le support du dispositif d'assistance 40 sur la nacelle et son fonctionnement d'assistance. A la Figure 5, qui est identique à la Figure 4, on a représenté les deux capots 36 et 39 à l'état ouvert, les deux dispositifs d'assistance étant à l'état étendu, les ressorts étant complètement allongés.

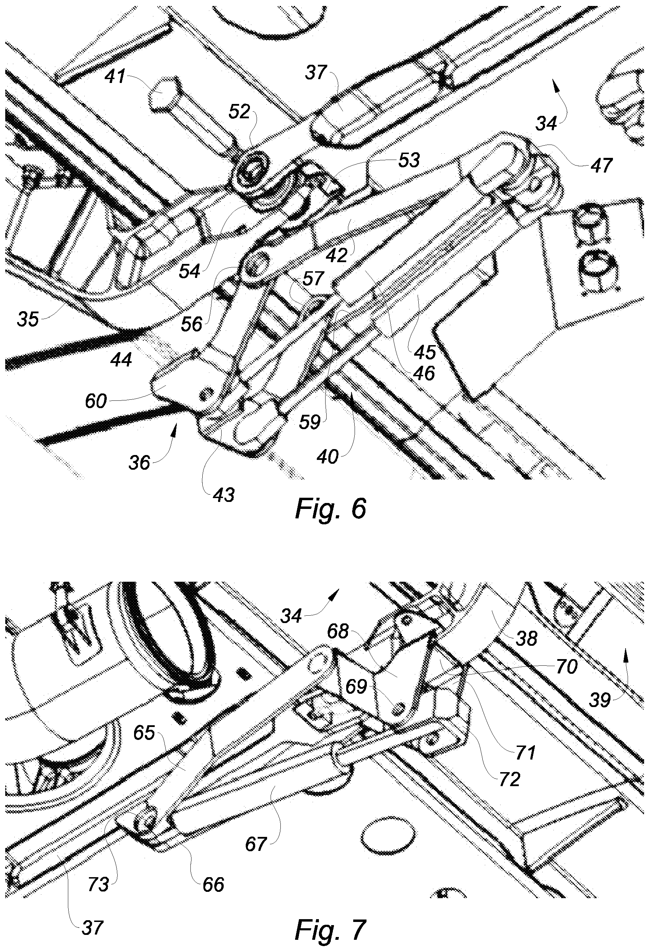

A la Figure 6, on a représenté le dispositif d'assistance 40, juste avant son montage sur la ferrure 35. A cet effet, l'arbre original de l'articulation de la ferrure 35 sur le pylône est retiré, le capot 36 étant en position levée. On vient placer le dispositif d'assistance 40 par l'articulation homologue 56, 57, les deux ressorts 46, 45 étant en état étendu. Il suffit de replacer un arbre plus long 41 à travers le perçage 52 prévu à cet effet. On vient placer les deux bras parallèles de l'étrier constitué par les deux leviers parallèles 42 avant et 59 arrière de sorte que leurs extrémités gauche qui portent des perçages 56 et 57 passent à l'extérieur de la ferrure fixe de la face intérieure du pylône 34. Dans ce mode de réalisation, la ferrure fixe de la face intérieure du pylône est constituée par une extrémité en fourche de la barre de renfort 37. Les deux bras de la fourche formant la ferrure fixe portent chacun un perçage 52 ou 53 et entourent l'extrémité de la ferrure 35 sur laquelle est monté le capot gauche 36.

Lorsque tous ces composants sont alignés par l'axe commun de l'articulation à reformer, l'arbre 41 est inséré dans l'ensemble des perçages et l'opération de modification de l'articulation de montage du capot est terminée, en même temps que le dispositif d'assistance 40 est installé à demeure dans la nacelle. Il suffit alors de refermer le capot gauche 36 pour mettre les deux ressorts à compression 46 et 45 en compression et prêts à assister la manoeuvre d'ouverture ultérieure.

A la Figure 7, on a représenté un autre mode de réalisation d'un dispositif d'assistance, alors qu'il est monté sur le capot droit 39 sur le même type de nacelle que celui des Figures 4 à 6. Le dispositif d'assistance présente la même forme en étrier avec deux barres 65 et 66 réunies à gauche sur une pièce d'appui 73 sur la barre de renfort 37. Les autres extrémités des barres 65 et 66, qui constituent l'analogue du levier 11 du mode de réalisation de la Figure 3, portent la pièce coudée 68-72 composée en deux parties parallèles 68 et 71 comme dans le cas du mode de réalisation des figures 4 à 6. Les deux parties parallèles 68 et 71 de la pièce coudée 68-72 sont réunies par une pièce d'appui 70 sur la ferrure 38 montée sur le capot droite 39.

L'espace entre les deux parties parallèles 68 et 71 de la pièce coudée 68-72 reçoit un capuchon 72 articulé sur un axe 69 traversant les deux parties parallèles 68 et 71. Le capuchon 72 est destiné à recevoir l'extrémité libre de la tige mobile d'un ressort à compression unique 67, dont le corps proprement dit 67 est articulé à gauche sur les barres parallèles 65 et 66.

Le montage et le fonctionnement de l'étrier du dispositif d'assistance du mode de réalisation de la Figure 7 sont identiques à ceux du mode de réalisation des Figures 4 à 6.

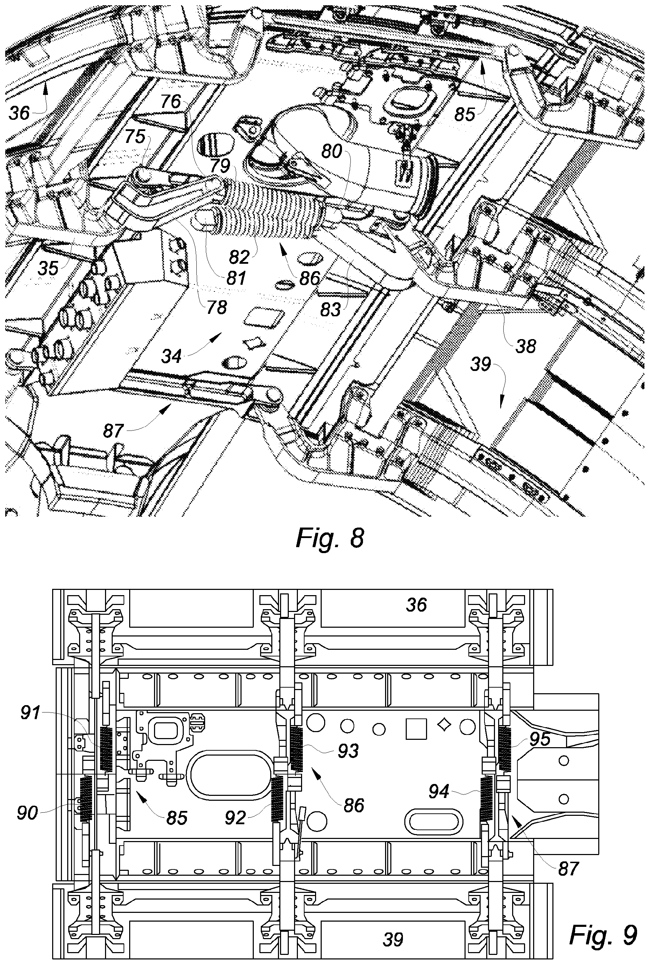

A la Figure 8, on a représenté un autre mode de réalisation d'un dispositif d'assistance selon l'invention. La nacelle sur laquelle il est installé est identique à celle des Figures 4 à 7 et porte les mêmes numéros de référence. On remarque cependant que les capots gauche 36 et droite 39 portent chacun trois ferrures articulées sur les extrémités en fourche - telle que celle représentée à la Figure 6 sur trois barres de renfort 85, 86 et 87. Dans le mode de réalisation de la Figure 8, un dispositif d'assistance unique est disposé sur l'articulation de la barre de renfort centrale 86. Un dispositif d'assistance 75-80 est monté à gauche selon un schéma analogue à celui du mode de réalisation de la Figure 3, sur l'articulation 75 commune avec la ferrure 35 du capot de gauche 36, tandis qu'un dispositif d'assistance 81-83 identique au dispositif d'assistance 75-80 de gauche est monté sur l'articulation commune avec la ferrure 38 du capot de droite 39.

Le dispositif d'assistance de ce mode de réalisation se distingue des précédents en ce qu'il incorpore un ressort hélicoïdal 79 ou 82 au lieu d'un ressort à gaz et qu'il ne reprend pas la forme d'un étrier, étant alors monté d'un côté de l'axe 75 qui forme l'articulation commune de la pièce coudée 78 (respectivement 83), du levier 76 (respectivement 81) portant le ressort hélicoïdal 79 (respectivement 82) du dispositif d'assistance qui agit sur la ferrure 35 (respectivement 38), et de la ferrure 35 proprement dite sur la ferrure fixe en extrémité de la barre de renfort 86..

A la Figure 9, on a représenté une vue de dessous du mode de réalisation de la Figure 8, mais dans lequel un dispositif d'assistance a été ajouté pour chacune des trois ferrures des deux capots gauche 36 et droite 39, savoir les dispositifs 90, 92 et 94 pour les trois ferrures du capot de droite 39 et les dispositifs 91, 93 et 95 pour les trois ferrures du capot de gauche 36.

Les dispositifs des autres modes de réalisation précités peuvent aussi être répartis sur l'ensemble des ferrures et articulations de l'un ou l'autre des capots ou limités à certaines d'entre elles. Les ressorts à compression utilisés pour produire le moment d'assistance à l'ouverture sont de tout type comprenant les ressorts à gaz et les ressorts hélicoïdaux.

## Revendications

1. Dispositif d'assistance pour la manoeuvre d'un capot (1, 2 ; 36, 39) de nacelle de turboréacteur articulé (5, 6 ; 52-54) au moyen d'au moins une ferrure (4, 7 ; 35, 38), **caractérisé en ce qu'**il comporte :
- au moins une pièce coudée (13-15 ; 41, 43, 61 ; 68, 71 ; 78) montée sur une articulation (41 ; 75) adaptée pour être coaxiale à l'articulation (5, 6 ; 52-54) de ladite ferrure (4, 7 ; 35, 38) et présentant une extrémité portant sur ladite ferrure (4, 7 ; 35, 38), et
- un ressort de compression (17, 27 ; 45, 46 ; 67 ; 79, 82) appliqué sur ladite pièce coudée, adapté pour exercer sur la ferrure (4, 7 ; 52-54) de capot un moment d'assistance lorsque le capot est levé.

2. Dispositif selon la revendication 1, **caractérisé en ce que** l'application du ressort à compression sur ladite pièce coudée comporte une articulation (16 ; 69, 72 ; 76) de la pièce coudée (13-15 ; 41, 43, 61 ; 68, 71 ; 78) dont une extrémité porte une pièce (13 ; 47 ; 70) adaptée pour s'appuyer sur la ferrure (4, 7 ; 52-54) de capot à assister.

3. Dispositif selon la revendication 1 ou 2, **caractérisé en ce que** le ressort à compression est appliqué sur un levier (11 ; 42, 59, 65, 66; 80, 81) qui comporte une pièce d'appui (19 ; 47) sur la surface intérieure d'un support (3 ; 34) des capots comme le pylône de nacelle.

4. Dispositif selon la revendication 3, **caractérisé en ce qu'**il affecte la forme d'un étrier, le levier comportant une paire de barres parallèles (42, 59 ; 65, 66) et la pièce coudée comportant deux parties parallèles (43, 61 ; 68, 71).

5. Dispositif selon l'une quelconque des revendications précédentes, **caractérisé en ce que** le ressort à compression (17, 27 ; 45, 46 ; 67 ; 79, 82) comporte au moins un ressort choisi notamment parmi les ressorts à gaz ou les ressorts hélicoïdaux.

6. Dispositif selon la revendication 5 dans la dépendance de la revendication 4, **caractérisé en ce qu'**il comporte deux ressorts (45, 46) disposés entre les parties parallèles (43, 60 ; 68, 71) en étrier de ladite pièce coudée et les barres parallèles (42, 59 ; 65, 66) du levier.

7. Dispositif selon l'une quelconque des revendications précédentes, **caractérisé en ce que** l'articulation (6 ; 41 ; 75) colinéaire à une articulation existante ou charnière pour une ferrure (7 ; 35) du capot (1, 2 ; 36, 39) comporte un arbre (41 ; 75) adapté pour être commun avec l'articulation de la ferrure de capot sur laquelle est appliqué le moment d'assistance du ressort de compression.

8. Nacelle de turboréacteur ou de même genre, la nacelle étant du genre comportant au moins un capot articulé sur un support comme le pylône, **caractérisé en ce qu'**elle comporte au moins un dispositif d'assistance au levage du capot selon l'une quelconque des revendications précédentes, sur au moins une articulation d'une pluralité d'articulations dudit capot.

## Patentansprüche

1. Vorrichtung zur Unterstützung der Bewegung einer Abdeckung (1, 2; 36, 39) einer Turbotriebwerksgondel, die anhand zumindest eines Beschlages (4, 7; 35, 38) angelenkt (5, 6; 52-54) ist, **dadurch gekennzeichnet, dass** sie Folgendes umfasst:
- zumindest ein auf einem Gelenk (41; 75) montiertes Bogenstück (13-15; 41, 43, 61; 68, 71; 78), das ausgeführt ist, um koaxial zum Gelenk (5, 6; 52-54) des besagten Beschlages (4, 7; 35, 38) zu sein, und ein Ende aufweist, das auf den besagten Beschlag (4, 7; 35, 38) gerichtet ist, und
- eine am besagten Bogenstück angelegte Druckfeder (17, 27; 45, 46; 67; 79, 82), die ausgeführt ist, um am Abdeckungsbeschlag (4, 7; 52-54) ein Unterstützungsmoment anzulegen, wenn die Abdeckung angehoben wird.

2. Vorrichtung nach Anspruch 1, **dadurch gekennzeichnet, dass** das Anlegen der Feder zum Komprimieren am besagten Bogenstück ein Gelenk (16; 69, 72; 76) des Bogenstücks (13-15; 41, 43, 61; 68, 71; 78) umfasst, von dem ein Ende ein Teil (13; 47; 70) trägt, das ausgeführt ist, um sich am zu unterstützenden Abdeckungsbeschlag (4, 7; 52-54) anzulegen.

3. Vorrichtung nach Anspruch 1 oder 2, **dadurch gekennzeichnet, dass** die Feder zum Komprimieren an einem Hebel (11; 42, 59, 65, 66; 80, 81) angelegt wird, der ein Anlageteil (19; 47) an der Innenfläche eines Trägers (3; 34) der Abdeckungen, wie den Gondel-Trägermast umfasst.

4. Vorrichtung nach Anspruch 3, **dadurch gekennzeichnet, dass** sie die Form eines Bügels aufweist, wobei der Hebel ein Paar an parallelen Stangen (42, 59; 65, 66) umfasst, und das Bogenstück zwei parallele Abschnitte (43, 61; 68, 71) umfasst.

5. Vorrichtung nach einem der vorhergehenden Ansprüche, **dadurch gekennzeichnet, dass** die Feder zum Komprimieren (17, 27; 45, 46; 67; 79, 82) zumindest eine Feder umfasst, die vor allem aus den Gasfedern oder den Spiralfedern ausgewählt wird.

6. Vorrichtung nach Anspruch 5, in Abhängigkeit von Anspruch 4, **dadurch gekennzeichnet, dass** sie zwei Federn (45, 46) umfasst, die zwischen den parallelen Abschnitten (43, 60; 68, 71) als Bügel für das besagte Bogenstück und den parallelen Stangen (42, 59; 65, 66) des Hebels angeordnet sind.

7. Vorrichtung nach einem der vorhergehenden Ansprüche, **dadurch gekennzeichnet, dass** das mit einem bestehenden Gelenk kolineare Gelenk (6; 41; 75) oder Scharnier für einen Beschlag (7; 35) der Abdeckung (1, 2; 36, 39) eine Welle (41; 75) umfasst, die ausgeführt ist, um eins mit dem Gelenk des Abdeckungsbeschlags zu sein, an dem das Unterstützungsmoment der Druckfeder angelegt wird.

8. Turbotriebwerksgondel oder derselben Art, wobei die Gondel dergestalt ist, dass sie zumindest eine angelenkte Abdeckung auf einem Träger, wie dem Trägermast umfasst, **dadurch gekennzeichnet, dass** sie zumindest eine Vorrichtung zur Unterstützung zum Heben der Abdeckung nach einem der vorhergehenden Ansprüche auf zumindest einem Gelenk aus einer Vielzahl von Gelenken der besagten Abdeckung umfasst.

## Claims

1. An assistance device for maneuvering a cowl (1, 2, 36, 39) of an articulated turbojet engine nacelle (5, 6; 52-54) by means of at least one fitting (4, 7; 35, 38), **characterized in that** it includes:
- at least one bent part (13-15; 41, 43, 61; 68, 71; 78) mounted on an articulation (41; 75) adapted to be coaxial with the articulation (5, 6, 52-54) of said fitting (4, 7; 35, 38) and having an end bearing on said fitting (4, 7; 35, 38), and
- a compression spring (17, 27; 45, 46; 67, 79, 82) applied on said bent part, adapted to exert an assistance moment on the cowl fitting (4, 7; 52-54) when the cowl is raised.

2. The device according to claim 1, **characterized in that** the application of the compression spring on said bent part includes an articulation (16; 69, 72; 76) of the bent part (13-15; 41, 43, 61; 68, 71; 78), one end of which carries a part (13; 47; 70) adapted to bear on the cowl fitting (4, 7; 52-54) to be assisted.

3. The device according to claim 1 or 2, **characterized in that** the compression spring is applied to a lever (11; 42, 59, 65, 66; 80, 81) which includes a bearing part (19, 47) on the inner surface of a support (3; 34) of the cowls as the nacelle pylon.

4. The device according to claim 3, **characterized in that** it affects the shape of a stirrup, the lever including a pair of parallel bars (42, 59; 65, 66) and the bent part including two parallel portions (43, 61; 68, 71).

5. The device according to any one of the preceding claims, **characterized in that** the compression spring (17, 27; 45, 46; 67, 79, 82) includes at least one spring selected in particular from the gas springs or the helical springs.

6. The device according to claim 5 when dependent on claim 4, **characterized in that** it includes two springs (45, 46) disposed between the stirrup parallel portions (43, 60; 68, 71) of said bent part and the parallel bars (42, 59; 65, 66) of the lever.

7. The device according to any one of the preceding claims, **characterized in that** the articulation (6; 41; 75) collinear to an existing articulation or hinge for a fitting (7; 35) of the cowl (1, 2; 36, 39) includes a shaft (41; 75) adapted to be common with the articulation of the cowl fitting on which the assistance moment of the compression spring is applied.

8. A turbojet engine nacelle or the like, the nacelle being of the type including at least one cowl articulated on a support as the pylon, **characterized in that** it includes at least one device for assisting the lifting of the cowl according to any one of the preceding claims, on at least one articulation of a plurality of articulations of said cowl.
